# EUROPEAN PATENT SPECIFICATION

(11) **EP 2 940 823 B1**
(45) Date of publication and mention of the grant of the patent: **21.02.2018**
(21) Application number: 12891250.8
(22) Date of filing: 25.12.2012
(51) Int. Cl.: H02K 17/42, G06Q 50/06, H02J 3/14

(54) **POWER DEMAND ADJUSTMENT SYSTEM AND POWER DEMAND ADJUSTMENT METHOD**
LEISTUNGSBEDARFSREGELUNGSSYSTEM UND LEISTUNGSBEDARFSREGELUNGSVERFAHREN
SYSTÈME ET PROCÉDÉ DE RÉGLAGE DE DEMANDE DE PUISSANCE

(43) Date of publication of application: 04.11.2015
(73) Proprietor: Hitachi, Ltd., Tokyo 100-8280 (JP)
(72) Inventor: TOMITA, Yasushi, Tokyo 100-8280 (JP); TAKAHASHI, Hirotaka, Tokyo 100-8280 (JP)
(74) Representative: Beetz & Partner mbB
(86) International application number: PCT/JP2012/083418
(87) International publication number: WO 2014/102894

(56) References cited:
- EP-A2- 1 294 071
- EP-A2- 2 296 112
- JP-A- 2002 176 729
- JP-A- 2006 074 952
- JP-A- 2009 213 240
- JP-A- 2010 166 636
- US-A1- 2011 196 547

## Description

### Technical Field

The present invention relates to a technique for adjusting the amount of power demand of a consumer. EP 2 296 112 A2 discloses a power demand adjustment system and method according to the preamble portions of patent claims 1 and 5, respectively.

### Background Art

In a power grid, the supply-demand balance, which is the balance between the amount of power generation and the amount of demand, needs to be always kept constant in order to maintain stable frequency, voltage and the like in the entire grid. There are increasing expectations on the utilization of demand adjustment as a measure for temporarily adjusting the supply-demand balance in order to cope with a sudden increase in power demand or extensive introduction of power generation based on renewable energy with unstable output, or the like.

The adjustment of the supply-demand balance has various purposes such as the maintenance of frequency and the relaxation of restrictions on the power flow on the power transmission line. Also, there are various resources that can be measures for demand adjustment, based on various consumer types such as buildings and homes, and various equipment types such as air-conditioner and electric water heater. Therefore, the adjustment of the supply-demand balance requires that a demand adjustment resource should be properly selected and applied to each purpose of use.

JP 2000-333369 A and JP 11-308771 A disclose a technique for adjusting power demand at each time in a system where there is a plurality of power grid supply-demand control devices and a plurality of consumers.

EP 2 296 112 A2 discloses a power demand adjustment system for adjusting demand in a power grid, comprising: a target management unit which provides adjustment target data based on a condition of request for demand adjustment; a model management unit which manages a model describing a behavior in demand adjustment of a demand adjustment resource; and an adjustment capability allocation unit which decides a resource to be adjusted, which is a demand adjustment resource to be a subject of demand adjustment, and an amount of adjustment in the resource to be adjusted, in such a way as to satisfy the adjustment target data on the basis of the model.

This document further describes a power demand adjustment method for adjusting demand in a power grid, comprising: a step in which a target management unit provides adjustment target data based on a condition of request for demand adjustment; a step in which a model management unit manages a model describing a behavior in demand adjustment of a demand adjustment resource; and a step in which an adjustment capability allocation unit decides a resource to be adjusted, which is a demand adjustment resource to be a subject of demand adjustment, and an amount of adjustment in the resource to be adjusted, in such a way as to satisfy the adjustment target data on the basis of the model.

### Summary of Invention

### Technical Problem

As described above, the adjustment of the supply-demand balance has various purposes. Also, if the purpose of the adjustment of the supply-demand balance varies, the conditions of request vary, such as the place and time to adjust demand, the amount of adjustment needed, and the response time required for adjustment. Also, the demand adjustment resources include resources in which characteristics such as the place, time, amount of response available, response time, and cost are different. Moreover, with some demand adjustment resources, changing demand at a certain time may change demand at a different time. Consequently, there is a possibility that the demand adjustment capability may become insufficient at the different time, or that procurement of a relative expensive demand adjustment resource may be needed, thus increasing the cost.

Thus, in the adjustment of the supply-demand balance in which the demand of demand adjustment resources is changed, it is desirable to perform proper adjustment in consideration of the respective conditions of request corresponding to the various purposes of adjustment, and the characteristics of the demand adjustment resources, and also in consideration of the influence on different times.

An object of the invention is to provide a technique for properly adjusting demand in consideration of the conditions of request for demand adjustment and the characteristics of demand adjustment resources.

### Solution to Problem

A power demand adjustment system according to an aspect of the invention is a power demand adjustment system for adjusting demand in a power grid according to Claim 1. A power demand adjustment method for adjusting demand in a power grid according to the invention is disclosed in Claim 5.

### Advantageous Effect of Invention

According to the invention, demand adjustment can be properly performed in consideration of the conditions of request for demand adjustment and the characteristics of demand adjustment resources.

### Brief Description of Drawings

[FIG. 1] FIG. 1 is a block diagram including an example of the configuration of an overall system, including a power system and a system for adjusting demand in the power system, according to the embodiment.
[FIG. 2] FIG. 2 is a functional block diagram showing an example of the configuration of the power demand adjustment system according to the embodiment.
[FIG. 3] FIG. 3 is a chart showing a flow of processing in the entire power demand adjustment system according to the embodiment.
[FIG. 4A] FIG. 4A is a table showing an example of adjustment capability request data.
[FIG. 4B] FIG. 4B is a table showing an example of adjustment target data.
[FIG. 5] FIG. 5 is a table showing an example of adjustment capability resource operation state prediction data.
[FIG. 6A] FIG. 6A is a table showing an example of adjustment capability resource response condition data.
[FIG. 6B] FIG. 6B is a table showing an example of adjustment capability response condition data.
[FIG. 7] FIG. 7 is a table showing an example of adjustment capability resource inter-time change influence data.
[FIG. 8A] FIG. 8A is a table showing an example of adjustment capability resource allocation data.
[FIG. 8B] FIG. 8B is a table showing an example of adjustment capability allocation data.

### Description of Embodiments

Next, a mode for carrying out the invention (referred to as an "embodiment") will be described in detail, referring to the drawings according to need.

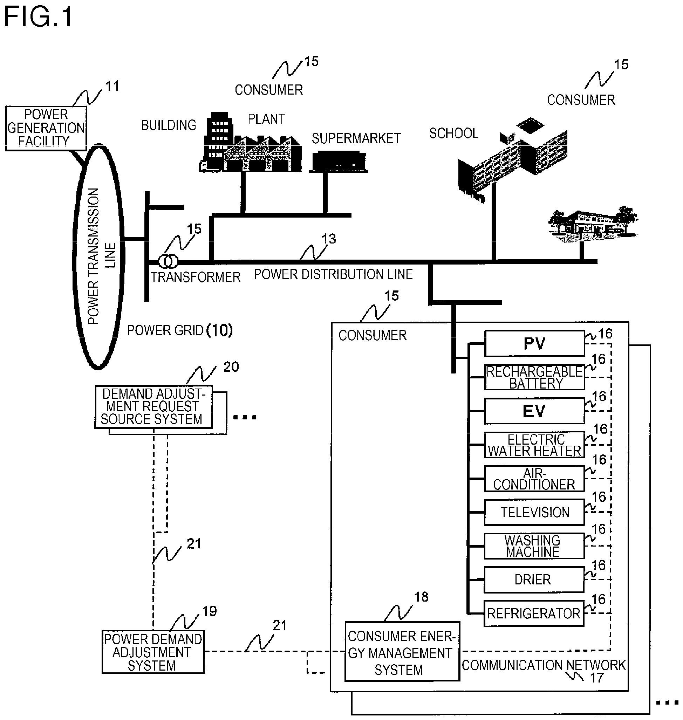

FIG. 1 is a block diagram including an example of the configuration of an overall system, including a power system and a system for adjusting demand in the power system, according to the embodiment.

A power system (power grid) 10 is a system for supplying electric power to a consumer 15 and is formed by facilities such as a power generation facility 11, a power transmission line 12, a power distribution line 13, a transformer 14, and a switch, not shown.

The consumer 15 that receives power supply by the power system 10 includes ordinary homes as well as large-scale consumers such as schools, commercial facilities, buildings, and plants. In an example of the ordinary house, power generation facilities such as a rechargeable battery, EV or PV, in addition to electric load devices such as an air-conditioner, television, washing machine, drier, refrigerator, and electric water heater, may be installed at consumer ends of the consumer 15.

Hereinafter, the devices installed at the consumer ends are generally referred to as consumer devices 16.

At the consumer ends, these various consumer devices 16 are managed by a consumer energy management system 18 connected via a communication network 17.

A power demand adjustment system 19 which adjusts demand of the consumer 15 is connected with a demand adjustment request source system 20 via a communication network 21 and also connected with the consumer energy management system 18 at each consumer end via the communication network 21. The power demand adjustment system 19 adjusts the power demand in the entire power system 10 on the basis of a request from the demand adjustment request source system 20.

There can be a plurality of the demand adjustment request source systems 20. The demand adjustment request source system 20 is a system which requests the power demand adjustment system 19 to adjust the amount of power demand in the power grid. The request for demand adjustment includes conditions of request such as place, time, and allowable range of the amount of adjustment associated with each other, and this is transmitted to the power demand adjustment system as adjustment capability request data.

As an example of the demand adjustment request source system 20, there is a supply-demand control system which controls the supply-demand balance in order to maintain frequencies in the entire power grid.

If a shortage of the amount of power generation in the entire power grid at a certain point in the future for a certain reason is predicted, restraining the amount of power demand by the amount of the shortage may be considered as a measure to maintain the supply-demand balance in the entire power grid. Therefore, the supply-demand control system requests the time period during which power demand should be restrained (retraining time period) and the amount of power demand that should be restrained during that restraining time period (amount of power demand restrained), from the power demand adjustment system 19.

Also, an another example of the demand adjustment request source system 20, there is a power flow control system which controls power flow distribution in order to maintain the degree of stability of voltage in the entire power transmission system.

If a departure of the power flow on a certain power transmission line 12 from the upper limit of restriction at a certain point in the future is predicted, restraining the amount of power demand on the side of the consumer 15 at the terminal end may be considered as a measure to retrain the power flow on the power transmission line 12. Therefore, the power flow control system requests the restraining time period and the amount of power demand restrained, from the power demand adjustment system 19.

The consumer energy management system 18 at each consumer end is a system which monitors and controls the operation state of the demand device 16, represented by HEMS (Home Energy Management System) or BEMS (Building and Energy Management System). From the power demand adjustment system 19, data including the amount of adjustment of power demand and the adjustment time period is received as a request for power demand adjustment (demand adjustment request) and the operation state of the consumer device 16 is controlled so as to satisfy this demand adjustment request.

For example, if a request for restraining power demand of 500 W from 13:00 to 14:00 is received, the consumer energy management system 18 stops the consumer device 16 (for example, air-conditioner) that starts operating at 13:00 and consumes 500 W.

The consumer energy management system 18 sends data representing the operation state of the subordinate consumer device 16 (operation state data) to the power demand adjustment system 19.

The power demand adjustment system 19 acquires adjustment capability request data from each demand adjustment request source system 20 and decides the distribution of the demand adjustment request to the consumer energy management system 18 of each consumer 15 so as to satisfy all the adjustment capability request data. Moreover, the power demand adjustment system 19 distributes the demand adjustment request that is decided, to each consumer energy management system 18.

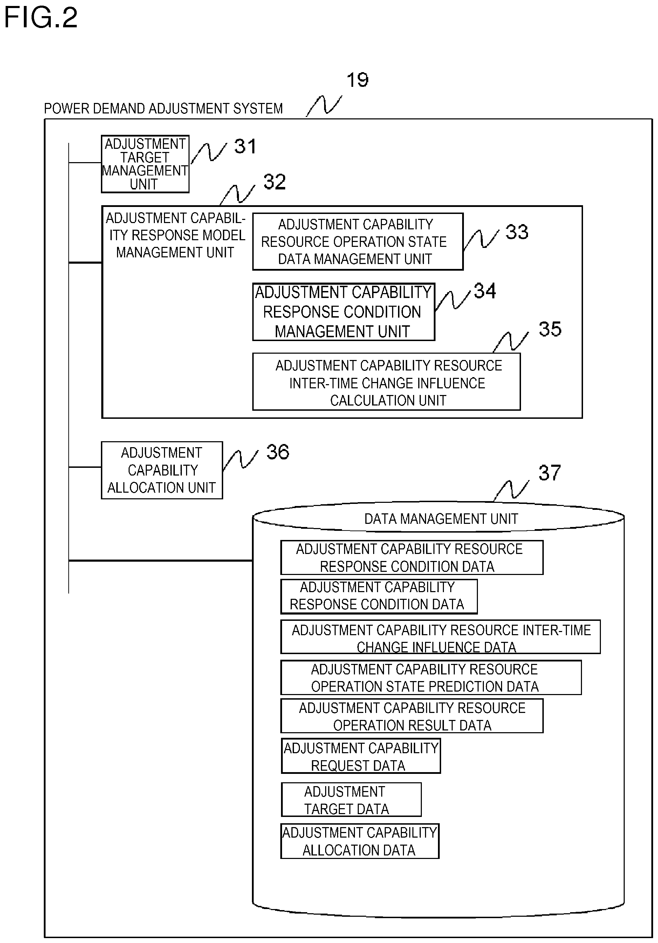

FIG. 2 is a functional block diagram showing an example of the configuration of the power demand adjustment system according to the embodiment.

The power demand adjustment system 19 includes an adjustment target management unit 31, an adjustment capability response model management unit 32, an adjustment capability allocation unit 36, and a data management unit 37. The adjustment capability response model management unit 32 has an adjustment capability resource operation state data management unit 33, an adjustment capability response condition management unit 34, and an adjustment capability resource inter-time change influence calculation unit 35. The respective functional blocks constitute the power demand adjustment system 19 operate in collaboration with each other.

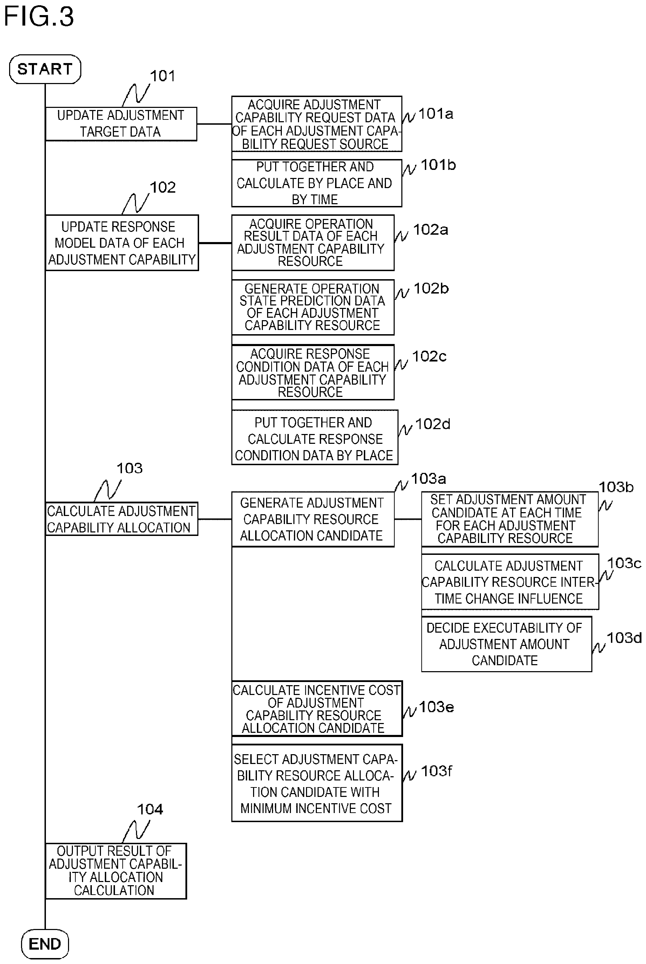

FIG. 3 is a chart showing a flow of processing in the entire power demand adjustment system according to the embodiment.

Hereinafter, the processing in each functional block shown in FIG. 2 will be described according to the flow of FIG. 3.

As Step 101, the adjustment target management unit 31 acquires adjustment capability request data which is a condition of request for demand adjustment, from each demand adjustment request source system 20 (Step 101a), puts these data together (Step 101b), and thus generates adjustment target data. The adjustment target management unit 31 stores the adjustment target data put together, in the data management unit 37.

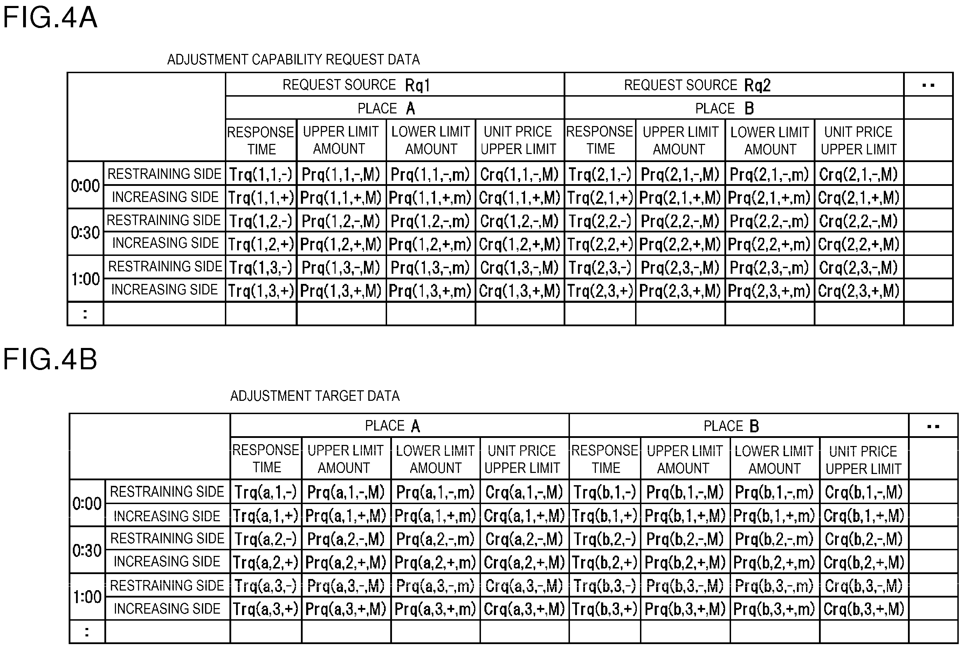

FIG. 4A is a table showing an example of the adjustment capability request data. FIG. 4B is a table showing an example of the adjustment target data. The adjustment capability request data of FIG. 4A and the adjustment target data of FIG. 4B correspond to each other.

The adjustment capability request data of FIG. 4A is data for managing the place where demand should be adjusted, the upper limit and lower limit of the amount of adjustment that is necessary at each time, the direction of adjustment in terms of increase or phenomenon, the response time, and the upper limit of the unit price per unit adjustment amount. The upper limit of the unit price per unit adjustment amount is a value expressing the allowable cost at the time of adjusting demand and a value decided by the demand adjustment requesting side.

In FIG. 4A, though the descriptions of both the restraining side and the increasing side are given in the table, one of these is set (the same applies below) . Then, in the case of restraining, the value set in the table as the value of demand adjustment is a negative value. In the case of increasing, the value is a positive value (the same applies below).

The adjustment target data of FIG. 4B is data made up of the adjustment capability request data of FIG. 4A put together by place. As the adjustment target data, the upper limit and lower limit of the amount of adjustment at each time, the direction of adjustment, the response time, and the upper limit of the unit price per unit adjustment amount are managed for each place.

As described above, the adjustment capability response model management unit 32 includes the adjustment capability resource operation state data management unit 33, the adjustment capability response condition management unit 34, and the adjustment capability resource inter-time change influence calculation unit 35, and manages a model expressing a behavior in demand adjustment of the demand adjustment resource such as inter-time influence (adjustment capability response model).

The adjustment capability resource operation state data management unit 33 acquires result data such as the operation stop state and the amount of power consumed per unit time of 30 minutes or the like, as the operation state of the consumer device 16, from each consumer energy management system 18, and stores the acquired result data in the data management unit 37 as adjustment capability resource operation result data (Step 102a) .

Also, the adjustment capability resource operation state data management unit 33 calculates the average value of the amounts of power consumption at each time in the past of each consumer device 16, regards this as a prediction value for each time in the future of each consumer device 16, and stores the prediction value in the data management unit 37 as adjustment capability resource operation state prediction data (Step 102b) .

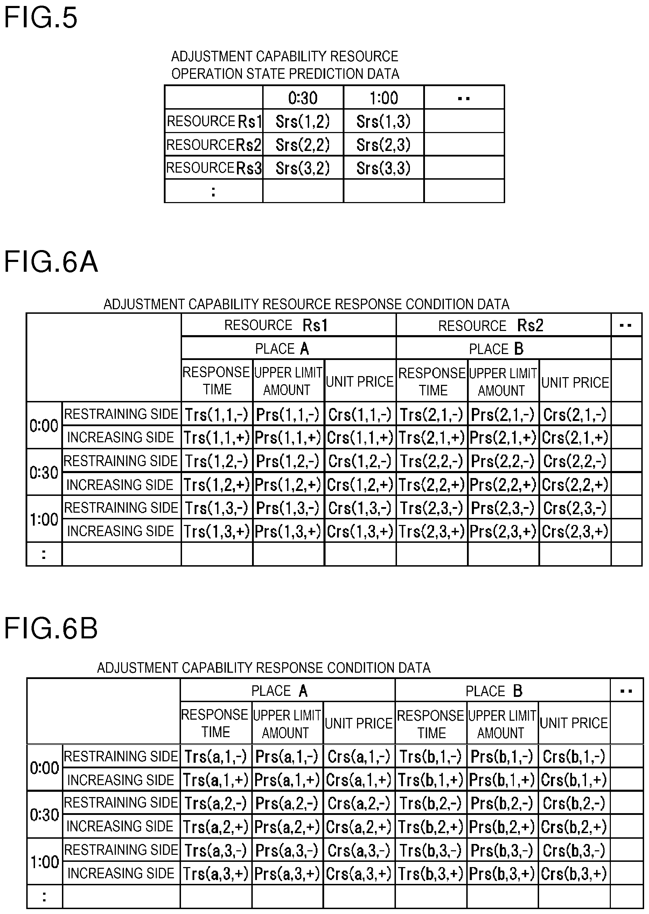

FIG. 5 is a table showing an example of the adjustment capability resource operation state prediction data. In FIG. 5, the prediction value of the operation state at each time is shown for each demand adjustment resource. The prediction value is expressed, for example, by the amount of power consumed by the consumer device 16 as a demand adjustment resource through the operation thereof.

The adjustment capability response condition management unit 34 acquires the upper limit amount available for demand adjustment at each time in the future, the response time, and the unit price that is the price per unit adjustment amount, set by the user at each consumer 15 via the consumer energy management system 18, and stores and manages the acquired data in the data management unit 37 as adjustment capability resource response condition data (Step 102c). Moreover, the adjustment capability response condition management unit 34 puts the adjustment capability resource response condition data together by place, generates the upper limit amount available for demand adjustment at each time in the future, the response time, and the unit price which is the price per unit adjustment amount, as adjustment capability response condition data, and stores this data in the data management unit 37 (Step 102d).

FIG. 6A is a table showing an example of the adjustment capability resource response condition data. FIG. 6B is a table showing an example of the adjustment capability response condition data. The adjustment capability resource response condition data of FIG. 6A and the adjustment capability response condition data of FIG. 6B correspond to each other. The unit price which is the price per unit adjustment amount here is a value expressing the price that is to be obtained when adjusting demand, and a value decided by the side providing a resource for demand adjustment.

The adjustment capability resource inter-time change influence calculation unit 35 predicts the amount of demand change at a different time in the case where demand adjustment is carried out at a certain time, with respect to each of the adjustment capability resources which are the consumer devices 16 at the respective consumer 15, and stores this in the data management unit 37 as adjustment capability resource inter-time change influence data. This calculation is carried out in response to a startup request from the adjustment capability allocation unit 36. When predicting the amount of demand change at a different time in the case where demand adjustment is carried out at a certain time, the adjustment capability resource inter-time change influence calculation unit 35 carries out calculations according to an inter-time demand change influence calculation model provided in advance for each consumer device type, on the basis of the adjustment capability resource operation state prediction data.

As an example of the inter-time influence, an electric water heater is considered. Normally, it is assumed that heat storage operation of heating water and storing the heated water is carried out by a predetermined time in the early morning, and that heat storage operation is not carried out during the daytime. If this electric water heater is made to carry out heat storage operation during the daytime in order to adjust demand, it is conceivable that the time to start the heat storage operation in the early morning is delayed by the additional operation time during the daytime, and that the amount of heat energy stored in the early morning is reduced by the amount of heat energy stored during the daytime.

The adjustment capability resource inter-time change influence calculation unit 35 may be configured, for example, to have a plurality of calculation models in advance and carry out calculations according to a model designated by the consumer 15 on the consumer energy management system 18.

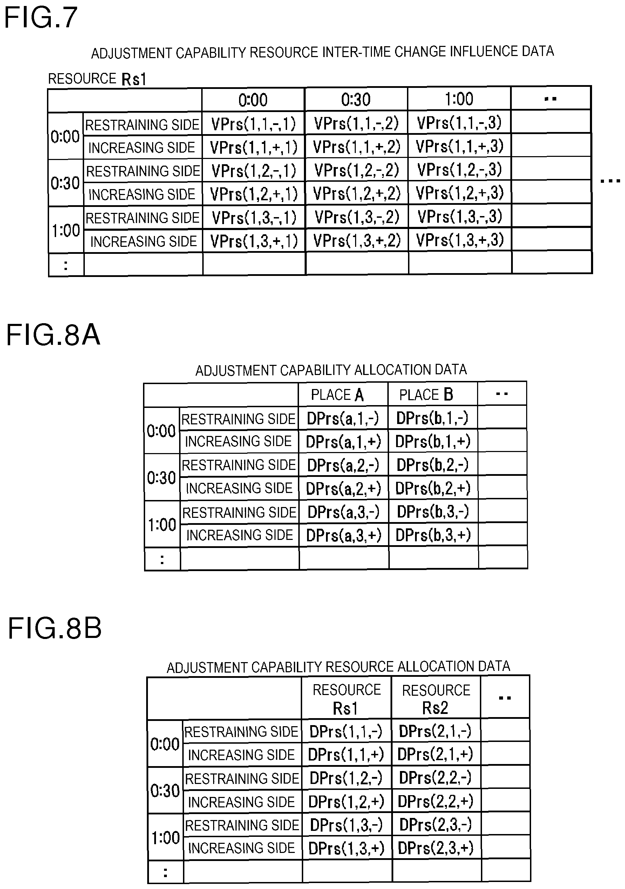

FIG. 7 is a table showing an example of the adjustment capability resource inter-time change influence data. Referring to FIG. 7, the time axis of the time when demand adjustment is carried out is taken in the vertical direction, and the time axis of the time when the influence of the demand adjustment is exerted is taken in the horizontal direction. The table shows the amount of demand influenced per unit adjustment amount. Based on this table, the demand at which time is influenced by demand adjustment at a certain time, and how, can be calculated.

The adjustment capability allocation unit 36 acquires the adjustment target data, the adjustment capability response condition data and the adjustment capability inter-time change influence data stored in the data management unit 37, decides an amount of adjustment Prs(i,t) to be requested of each adjustment capability resource i, as described below, and stores the amount of adjustment in the data management unit 37 as adjustment capability resource allocation data. The adjustment capability allocation unit 36 also stores the adjustment capability resource allocation data put together by place, in the data management unit 37 as adjustment capability allocation data.

FIG. 8A is a table showing an example of the adjustment capability recourse allocation data. FIG. 8B is a table showing an example of the adjustment capability allocation data. The adjustment capability resource allocation data of FIG. 8A expresses how much demand is restrained or increased at which time for each demand adjustment resource. The adjustment capability allocation data of FIG. 8B expresses how much demand is restrained or increased at which time for each place.

Hereinafter, processing to decide the amount of adjustment Prs(i,t) requested of each adjustment capability resource i by the adjustment capability allocation unit 36 will be described as (1) to (10).
(1) First, an adjustment capability resource i and time t are set.
(2) The value of Prs(i,t) is set in the form of random numbers so as to satisfy Prs(i,t,-) ≤ Prs(i,t) ≤ Prs(i,t,+).
   Here, Prs (i,t) > 0 means increasing demand, and Prs(i,t) < 0 means restraining demand.
(3) If Prs(i,t) < 0 and Srs(i,t) < | Prs(i,t)| hold, or if Prs(i,t) > 0 holds and Srs(i,t) + Prs(i,t) is above the maximum amount of power of the adjustment capability resource i, the processing of (2) is executed again. This is to prevent the amount of adjustment from exceeding an available adjustment range.
   The above-mentioned (1) to (2) are equivalent to Step 103b in FIG. 3.
(4) The corresponding part of the adjustment capability resource operation state prediction data is updated as follows.
   That is, Srs(i,t) is updated to Srs(i,t) + Prs(i,t).
(5) The calculation of the adjustment capability resource inter-time change influence is carried out as follows.
   (5-1) Prs(i,t) is handed to the adjustment capability resource inter-time change influence calculation unit 35 of the adjustment capability response model management unit, and the update of the adjustment capability resource inter-time change influence data is started up.
   (5-2) The adjustment capability resource operation state prediction data is updated as follows.
      If Prs(i,t) ≥ 0 holds, with respect to each time t' of each adjustment capability resource i, Srs(i,t')is updated to Srs(i,t') + Prs(i,t) × VPrs(i,t,+,t'). Here, if Srs(i,t') after the update exceeds the maximum amount of power of the adjustment resource i, update to the maximum amount of power is carried out. If Srs(i,t') after the update is below the minimum amount of power of the adjustment resource i, update to the minimum amount of power is carried out.
      If Prs(i,t) < 0 holds, with respect to each time t' of each adjustment capability resource i, Srs(i,t') is updated to Srs(i,t') + |Prs(i,t)| × VPrs(i,t,-,t'). Here, if Srs(i,t') after the update exceeds the maximum amount of power of the adjustment resource i, update to the maximum amount of power is carried out. If Srs(i,t') after the update is below the minimum amount of power of the adjustment resource i, update to the minimum amount of power is carried out.
   (5-3) If, with respect to each time t" up to the time t' of the adjustment capability resource i, Prs(i,t") < 0 and Srs(i,t") < |Prs(i,t")| hold, or if Prs(i,t") > 0 holds and Srs(i,t") + Prs(i,t") is above the maximum amount of power of the adjustment capability resource i, the processing of (4) to (5-2) is cancelled and the processing of (2) is executed again.
      The above-mentioned (5-1) to (5-3) are equivalent to Steps 103b to 103c in FIG. 3.
(6) The processing of (2) to (5-3) is repeatedly executed, advancing the time t one by one until the final time.
(7) The processing of (1) to (6) is repeatedly executed with respect to all the adjustment capability resources, and Prs = {Prs(i,t) : all the adjustment resource i, all the times t}, which is a combination of amounts of demand adjustment, is generated as an adjustment capability resource allocation candidate.
(8) Whether the adjustment capability resource allocation candidate Prs generated up to (7) satisfies the adjustment target data or not is determined as follows.
   If, with respect to all the places p and all the times t, Prq(a,t,-,m) ≤ ∑{Prs(i,t): all the adjustment capability resources i taking the place p} ≤ Prq(a,t,+,M) holds, it is determined that the candidate Prs satisfies the adjustment target.
   With the respect to the adjustment capability resource allocation candidate Prs that satisfies the adjustment target, IncentiveAll = ∑{Prs(i,t) × Crs(i,t): all the adjustment capability resources i and all the times t} is calculated.
(9) The processing of (1) to (8) is repeated to generate a predetermined number of adjustment capability resource allocation candidates or more.
   The above-mentioned (8) to (9) are equivalent to Step 103e in FIG. 3.
(10) Of the adjustment capability resource allocation candidates that are generated, the one with a minimum IncentiveAll value is selected and this is stored in the data management unit as final adjustment capability resource allocation data. Also, the data put together by place is stored in the data management unit as adjustment capability allocation data. This (10) is equivalent to Steps 103f to 104 in FIG. 3.

As described above, according to the embodiment, the adjustment capability allocation unit 36 decides a resource to be adjusted that is an demand adjustment resource to be a subject of demand adjustment, and the amount of adjustment in the resource to be adjusted, in such a way as to satisfy adjustment target data on the basis of the adjustment capability response model of each demand adjustment resource. Therefore, demand adjustment can be properly carried out in consideration of conditions of request for demand adjustment and characteristics of the demand adjustment resources.

Also, in the embodiment, the adjustment capability response model includes the adjustment capability resource inter-time change influence data, which is the information about inter-time influence in demand adjustment of the demand adjustment resources. Therefore, according to the embodiment, demand adjustment can be controlled in consideration of the inter-time influence.

Moreover, in the embodiment, the adjustment capability allocation unit 36 extracts one or more of candidates applied to demand adjustment, including the resource to be adjusted and the amount of adjustment that satisfy the adjustment target data, and applies the candidate with the minimum cost required for application, of the one or more candidates. Therefore, according to the embodiment, a method with lower cost can be selected from among adjustment methods that satisfy conditions of request.

Also, in the embodiment, the adjustment target management unit 31 prescribes the upper limit and lower limit of the amount of adjustment with respect to the place and time to apply demand adjustment, in the adjustment target data. The adjustment capability allocation unit 36 decides a resource to be adjusted that exists in the place, and the amount of adjustment using the resource to be adjusted at the time, in such a way that the amount of adjustment at the time in the place falls between the upper limit and lower limit. Therefore, according to the embodiment, it is possible to properly control the amount of adjustment in a power grid where the amount of adjustment needs to be controlled within a predetermined range.

Moreover, in the embodiment, the adjustment capability response model management unit 32 successively updates the adjustment capability response model on the basis of the operation result including the inter-time influence in the demand adjustment resource. Therefore, according to the embodiment, proper control based on new results can be maintained.

The above embodiment is an example for explaining the invention and is not intended to limit the scope of the invention only to the embodiment. A person skilled in the art can carry out the invention in various forms without departing from the scope of the invention.

For example, in the above embodiment, the configuration where the adjustment capability response model management unit 32 is installed within the power demand adjustment system 19 is described as an example. However, the invention is not limited to the example. As another example, the configuration where the adjustment capability response model management unit 32 is installed within the consumer energy management system 18 may be employed. Again, in such a case, the adjustment capability resource inter-time change influence calculation unit 35 may not be installed in the consumer energy management system 18 and may be installed in the power demand adjustment system 19. In these cases, data needed in each functional block may be managed within a data management unit, not shown, in the consumer energy management system 18.

### Reference Signs List

10 ... power system, 11 ... power generation facility, 12 ... power transmission line, 13 ... power distribution line, 14 ... transformer, 15 ... each consumer, 15 ... consumer, 16 consumer device, 17 ... communication network, 18 ... consumer energy management system, 19 ... power demand adjustment system, 20 ... demand adjustment request source system, 21 ... communication network, 31 ... adjustment target management unit, 32 ... adjustment capability response model management unit, 33 ... adjustment capability resource operation state data management unit, 34 ... adjustment capability response condition management unit, 35 ... adjustment capability resource inter-time change influence calculation unit, 36 ... adjustment capability allocation unit, 37 ... data management unit

## Claims

1. A power demand adjustment system (19) for adjusting demand in a power grid, comprising:
a target management unit (31) which provides adjustment target data based on a condition of request for demand adjustment;
a model management unit (32) which manages a model describing a behavior in demand adjustment of a demand adjustment resource; and
an adjustment capability allocation unit (36) which decides a resource to be adjusted, which is a demand adjustment resource to be a subject of demand adjustment, and an amount of adjustment in the resource to be adjusted, in such a way as to satisfy the adjustment target data on the basis of the model,
**characterized in that**
the model management unit (32) includes an adjustment capability resource inter-time change influence calculation unit (35).

2. The power demand adjustment system according to claim 1, wherein the adjustment capability allocation unit (36) extracts one or more candidates to be applied to the demand adjustment, including the resource to be adjusted and the amount of adjustment that satisfy the adjustment target data, and applies the candidate with a minimum cost needed for application, of the one or more candidates.

3. The power demand adjustment system according to any one of claims 1 or 2, wherein the target management unit (31) prescribes an upper limit and a lower limit of the amount of adjustment with respect to a place and a time to apply the demand adjustment, in the adjustment target data, and the adjustment capability allocation unit (36) decides a resource to be adjusted at the place, and an amount of adjustment at the time using the resource to be adjusted, in such a way that the amount of adjustment at the time in the place falls between the upper limit and the lower limit.

4. The power demand adjustment system according to any one of claims 1 to 3, wherein the model management unit (32) updates the model on the basis of an operation result including inter-time influence in the demand adjustment resource.

5. A power demand adjustment method for adjusting demand in a power grid, comprising:
a step in which a target management unit (31) provides adjustment target data based on a condition of request for demand adjustment;
a step in which a model management unit (32) manages a model describing a behavior in demand adjustment of a demand adjustment resource; and
a step in which an adjustment capability allocation unit (36) decides a resource to be adjusted, which is a demand adjustment resource to be a subject of demand adjustment, and an amount of adjustment in the resource to be adjusted, in such a way as to satisfy the adjustment target data on the basis of the model,
**characterized in that**
the model includes inter-time influence in demand adjustment of the demand adjustment resource.

## Patentansprüche

1. Energiebedarfsanpassungssystem (19) zur Anpassung des Bedarfs in einem Energieversorgungsnetz, mit:
einer Zielverwaltungseinheit (31), die Anpassungszieldaten liefert auf der Grundlage einer Bedingung einer Anforderung für eine Bedarfsanpassung,
einer Modellverwaltungseinheit (32), die ein Modell verwaltet, welches ein Verhalten einer Bedarfsanpassungsquelle bei einer Bedarfsanpassung beschreibt, und
- einer Anpassungsfähigkeits-Zuteilungseinheit (36), die eine anzupassende Quelle aussucht, die eine Bedarfsanpassungsquelle ist, die Gegenstand einer Bedarfsanpassung sein soll, und über einen Anpassungsumfang bei der anzupassenden Quelle entscheidet, derart, dass die Anpassungszieldaten auf der Basis des Modells erfüllt sind,
**dadurch gekennzeichnet, dass** die Modellverwaltungseinheit (32), eine Einheit (35) umfasst zur Berechnung des Einflusses zwischenzeitlicher Änderungen auf eine Anpassungsfähigkeitsquelle.

2. Energiebedarfsanpassungssystem nach Anspruch 1, wobei die Anpassungsfähigkeits-Zuteilungseinheit (36) einen oder mehrere Kandidaten, die einer Bedarfsanpassung unterzogen werden sollen, extrahiert, einschließlich der anzupassenden Quelle, sowie den Umfang der Anpassung, der die Anpassungszieldaten erfüllt, und die den Kandidaten unter dem einen oder den mehreren Kandidaten mit den für die Anwendung kleinsten erforderlichen Kosten einsetzt.

3. Energiebedarfsanpassungssystem nach einem der Ansprüche 1 oder 2, wobei die Zielverwaltungseinheit (31) eine obere Grenze und eine untere Grenze des Anpassungsumfangs festsetzt bezüglich eines Orts und einer Zeit der Bedarfsanpassung der Anpassungszieldaten, und
die Anpassungsfähigkeits-Zuteilungseinheit (36) eine anzupassende Quelle an diesem Ort und einen Umfang der Anpassung zu dieser Zeit bei Verwendung dieser anzupassenden Quelle auswählt, derart, dass der Anpassungsumfang zu der Zeit an diesem Ort zwischen die obere Grenze und die untere Grenze fällt.

4. Energiebedarfsanpassungssystem nach einem der Ansprüche 1 bis 3, wobei die Modellverwaltungseinheit (32) das Modell auf der Basis eines Betriebsergebnisses aktualisiert, das einen zwischenzeitlichen Einfluss bei der Bedarfsanpassungsquelle umfasst.

5. Energiebedarfsanpassungsverfahren zur Anpassung des Bedarfs in einem Energieversorgungsnetz, mit den folgenden Schritten:
einem Schritt, bei dem eine Zielverwaltungseinheit (31) Anpassungszieldaten liefert auf der Grundlage einer Bedingung einer Anforderung einer Bedarfsanpassung,
einen Schritt, in dem die Modellverwaltungseinheit (32) ein Modell verwaltet, welches ein Verhalten bei der Bedarfsanpassung einer Bedarfsanpassungsquelle beschreibt, und
einen Schritt, in dem eine Anpassungsfähigkeits-Zuteilungseinheit (36) eine anzupassende Quelle aussucht, die eine Bedarfsanpassungsquelle ist, die Gegenstand einer Bedarfsanpassung sein soll, und die über den Umfang der Anpassung einer anzupassenden Quelle entscheidet, derart, dass die Anpassungszieldaten auf der Basis des Modells erfüllt werden,
**dadurch gekennzeichnet, dass** das Modell einen zwischenzeitlichen Einfluss der Bedarfsanpassungsquelle auf die Bedarfsanpassung umfasst.

## Revendications

1. Système (19) d'ajustement de demande de puissance pour ajuster une demande dans un réseau électrique, comprenant :
une unité (31) de gestion de cible qui fournit des données de cible d'ajustement sur la base d'une condition de requête d'ajustement de demande ;
une unité (32) de gestion de modèle qui gère un modèle décrivant un comportement dans un ajustement de demande d'une ressource d'ajustement de demande ; et
une unité (36) d'affectation de capacité d'ajustement qui décide d'une ressource devant être ajustée, qui est une ressource d'ajustement de demande devant être l'objet d'un ajustement de demande, et d'une quantité d'ajustement dans la ressource devant être ajustée, de manière à satisfaire aux données de cible d'ajustement sur la base du modèle,
**caractérisé en ce que**
l'unité (32) de gestion de modèle inclut une unité (35) de calcul d'influence inter-temporelle de changement de ressource de capacité d'ajustement.

2. Système d'ajustement de demande de puissance selon la revendication 1, dans lequel l'unité (36) d'affectation de capacité d'ajustement extrait une ou plusieurs candidates devant être appliquée(s) à l'ajustement de demande, incluant la ressource devant être ajustée et la quantité d'ajustement qui satisfont aux données de cible d'ajustement, et applique la candidate avec un coût minimum nécessaire pour l'application, parmi la ou les candidate(s).

3. Système d'ajustement de demande de puissance selon l'une quelconque des revendications 1 ou 2, dans lequel l'unité (31) de gestion de cible prescrit une limite supérieure et une limite inférieure de la quantité d'ajustement par rapport à un emplacement et un moment pour appliquer l'ajustement de demande, dans les données de cible d'ajustement, et
l'unité (36) d'affectation de capacité d'ajustement décide d'une ressource devant être ajustée à l'emplacement, et d'une quantité d'ajustement au moment utilisant la ressource devant être ajustée, de manière à ce que la quantité d'ajustement au moment à l'emplacement tombe entre la limite supérieure et la limite inférieure.

4. Système d'ajustement de demande de puissance selon l'une quelconque des revendications 1 à 3, dans lequel l'unité (32) de gestion de modèle met le modèle à jour sur la base d'un résultat d'opération incluant une influence inter-temporelle dans la ressource d'ajustement de demande.

5. Procédé d'ajustement de demande de puissance pour ajuster une demande dans un réseau électrique, comprenant :
une étape dans laquelle une unité (31) de gestion de cible fournit des données de cible d'ajustement sur la base d'une condition de requête d'ajustement de demande ;
une étape dans laquelle une unité (32) de gestion de modèle gère un modèle décrivant un comportement dans un ajustement de demande d'une ressource d'ajustement de demande ; et
une étape dans laquelle une unité (36) d'affectation de capacité d'ajustement décide d'une ressource devant être ajustée, qui est une ressource d'ajustement de demande devant être l'objet d'un ajustement de demande, et d'une quantité d'ajustement dans la ressource devant être ajustée, de manière à satisfaire aux données de cible d'ajustement sur la base du modèle,
**caractérisé en ce que**
le modèle inclut une influence inter-temporelle dans l'ajustement de demande de la ressource d'ajustement de demande.
